# FASCICULE DE BREVET EUROPEEN

(11) **EP 2 197 067 B1**
(45) Date de publication et mention de la délivrance du brevet: **07.01.2015**
(21) Numéro de dépôt: 09176688.1
(22) Date de dépôt: 20.11.2009
(51) Int. Cl.: H01M 8/04, H01M 8/10, G01N 19/10

(54) **Dispositif et procédé de contrôle de l'humidification d'une pile à combustible**
Vorrichtung und Verfahren zur Kontrolle der Befeuchtung einer Brennstoffzelle
Device and method for controlling the humidification of a fuel cell

(30) Priorité: 26.11.2008 FR 0858031
(43) Date de publication de la demande: 16.06.2010
(73) Titulaire: STMicroelectronics (Tours) SAS, 37100 Tours (FR); Commissariat à l'Énergie Atomique et aux Énergies Alternatives, 75015 Paris (FR)
(72) Inventeur: Karst, Nicolas, 57600 Folkling (FR); Faucheux, Vincent, 38250 Lans en Vercors (FR)
(74) Mandataire: de Beaumont, Michel

(56) Documents cités:
- DE-A1-102006 041 961
- JP-A- 2005 116 185
- US-A- 5 804 721
- US-A1- 2008 057 367
- US-B1- 6 497 971

## Description

### Domaine de l'invention

La présente invention concerne des piles à combustible miniatures et, plus particulièrement, un dispositif et un procédé de contrôle de l'humidification de l'électrolyte d'une pile à combustible.

### Exposé de l'art antérieur

On considère ici des piles à combustible à hydrogène-oxygène dont la face supérieure formant la cathode de la pile est exposée à l'air ambiant (pile à respiration) et dont la face inférieure formant l'anode est exposée à une source d'hydrogène. Dans de telles piles, un électrolyte est pris en sandwich entre l'anode et la cathode. Côté anode, une réaction d'oxydation transforme l'hydrogène en ions H⁺ qui traversent l'électrolyte. Côté cathode, les ions H⁺ ayant traversé l'électrolyte réagissent avec l'oxygène de l'air pour former de l'eau. La circulation des ions H⁺ (et d'électrons formés complémentairement) assure la fonction de pile.

L'électrolyte est généralement constitué d'une membrane polymère, par exemple en Nafion (appellation commerciale de la société DuPont). La conductivité aux ions H⁺ de tels électrolytes est sensiblement constante si le taux d'humidité de l'électrolyte est compris dans une plage de valeurs mais diminue fortement si le taux d'humidité de l'électrolyte devient inférieur à cette plage.

Une fois la pile à combustible démarrée, l'eau générée au niveau de la cathode assure que le taux d'humidité de l'électrolyte reste suffisant. Toutefois, il arrive, par exemple lorsque la pile à combustible n'a pas été utilisée depuis longtemps et qu'elle a été conservée en atmosphère sèche et éventuellement chaude, que le matériau constituant l'électrolyte se dessèche. Dans ce cas, la pile à combustible ne démarre pas ou faiblement.

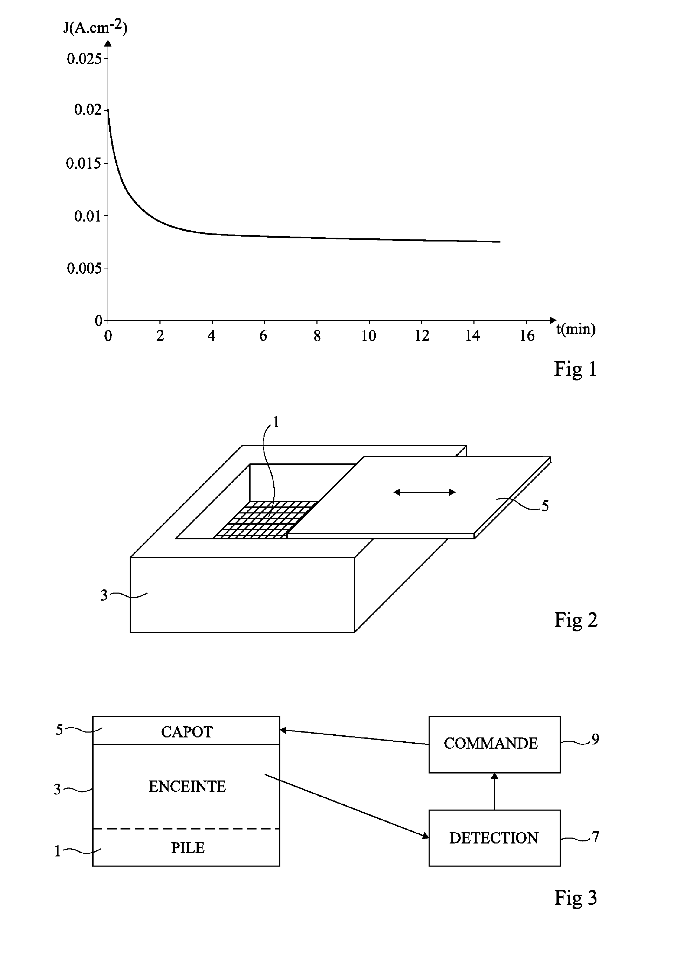

La figure 1 est une courbe illustrant les problèmes de démarrage d'une pile à combustible à respiration dont l'électrolyte est dans un état d'assèchement. A un instant initial où la pile est approvisionnée en hydrogène, celle-ci délivre une densité de courant environ égale à 0,02 A.cm⁻². Le passage du courant contribue à chauffer la pile et l'eau produite à la cathode s'évapore rapidement. Ainsi, l'électrolyte de la pile à combustible se dessèche encore, ce qui amène la densité de courant délivrée par la pile à diminuer jusqu'à atteindre une valeur inférieure à 0,01 A.cm⁻² dix minutes après le démarrage. La densité de courant dans la pile à combustible n'atteint donc pas les valeurs nominales souhaitées (de l'ordre de 0,7 à 0,9 A.cm⁻²).

Pour résoudre ce problème, il a été proposé, dans l'art antérieur (voir par exemple la demande de brevet WO 2006/012953 ou le brevet US 6 830 841), de contrôler l'humidification de l'électrolyte d'une pile à combustible en ajustant le taux d'humidité des gaz fournis à la pile. Ces systèmes de modification du taux d'humidité des gaz fournis à la pile sont relativement complexes et ne sont pas adaptés à des piles à combustible simples. Ces systèmes ne sont également pas adaptés à des piles à combustible miniatures, notamment à des piles à combustible destinées à alimenter de petits appareils électroniques tels que des téléphones portables.

Pour maintenir l'humidité d'une pile à combustible, on a aussi proposé de recouvrir la face de cathode de la pile d'un couvercle qui est fermé pendant les périodes de non utilisation de la pile (voir US-A1-2007/218338, JP-A-2005/032517, US-A1-2007/228740). Cette solution est inefficiente en cas de longues périodes de non utilisation, la pile, bien que protégée, séchant au bout d'un certain temps.

On connaît également les demandes de brevet US 2008/0057367, JP 2005-116185 et le brevet US 6 497 971 qui décrivent des piles à combustible formées dans des boîtiers à capot mobile.

### Résumé

Un objet de la présente invention est de prévoir un dispositif comprenant une pile à combustible apte à démarrer lorsque son électrolyte est dans un état d'assèchement.

Plus particulièrement, un objet de la présente invention est de prévoir un dispositif peu encombrant.

Un autre objet de la présente invention est de prévoir un dispositif autonome.

Un autre objet de la présente invention est de prévoir un dispositif adapté à un téléphone portable.

Ainsi, un mode de réalisation de la présente invention prévoit une pile à combustible oxygène/hydrogène comportant : un boîtier comprenant, du côté de la pile destiné à être exposé à de l'air, une enceinte munie d'un capot mobile ; un élément en un matériau se déformant en fonction du taux d'humidité dans le boîtier ; et un interrupteur s'ouvrant et se fermant en fonction de la déformation du matériau, ledit interrupteur comprenant deux bornes conductrices dont l'une est positionnée en surface de l'élément en un matériau se déformant en fonction du taux d'humidité, ledit interrupteur étant associé au moyen de commande et à la pile à combustible par une connexion en série de sorte que la pile à combustible alimente le moyen de commande lorsque l'interrupteur est fermé.

Selon un mode de réalisation de la présente invention, la pile à combustible comprend une couche formant un électrolyte et le matériau se déformant en fonction du taux d'humidité dans le boîtier est identique au matériau formant l'électrolyte.

Selon un mode de réalisation de la présente invention, l'interrupteur et le moyen de commande sont connectés en série entre deux électrodes de la pile à combustible.

Selon un mode de réalisation de la présente invention, le moyen de commande comprend un moteur.

Selon un mode de réalisation de la présente invention, un condensateur est connecté en parallèle sur le moteur.

Selon un mode de réalisation de la présente invention, la pile à combustible comprend en outre au moins un deuxième interrupteur sensible au taux d'humidité dans le boîtier et associé au moyen de commande.

Un mode de réalisation de la présente invention prévoit en outre un procédé de démarrage d'une pile à combustible oxygène/hydrogène formée dans un boîtier, comprenant une étape de fermeture d'un capot mobile du boîtier, du côté de la pile destiné à être exposé à de l'oxygène, puis une étape d'ouverture du capot lorsque le taux d'humidité dans le boîtier de la pile atteint un seuil prédéterminé, l'ouverture du capot étant réalisée en utilisant l'énergie produite par la pile.

Un mode de réalisation de la présente invention prévoit en outre un téléphone portable comprenant une pile à combustible telle que décrite ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, est une courbe illustrant les problèmes de démarrage d'une pile à combustible dont l'électrolyte est dans un état d'assèchement ;
la figure 2 illustre un boîtier de pile à combustible selon un mode de réalisation de la présente invention ;
la figure 3 est un schéma blocs d'un dispositif de contrôle d'humidité selon un mode de réalisation de la présente invention ;
les figures 4 à 6 illustrent divers modes de réalisation de dispositifs de contrôle d'humidité ;
la figure 7 est un schéma électrique d'un dispositif de contrôle d'humidité ;
la figure 8 est une courbe illustrant le démarrage d'une pile à combustible à contrôle d'humidité dont l'électrolyte est dans un état initial d'assèchement ;
la figure 9 illustre une variante de réalisation de dispositif de contrôle d'humidité ; et
la figure 10 illustre un exemple de téléphone portable alimenté par une ou plusieurs piles à combustibles munies de dispositifs de contrôle d'humidité.

Par souci de clarté de mêmes éléments ont été désignés par de mêmes références dans les différentes figures et, de plus, comme cela est habituel, les diverses figures ne sont pas tracées à l'échelle.

### Description détaillée

La figure 2 illustre un mode de réalisation d'un boîtier de pile à combustible.

La face supérieure, côté cathode, d'une ou de plusieurs piles à combustible 1 est disposée dans une enceinte ou boîtier 3. Le boîtier 3 est muni d'un capot mobile 5, par exemple un couvercle coulissant. Le capot mobile 5 peut être positionné pour ouvrir ou fermer l'enceinte 3. Un réservoir d'hydrogène, non représenté en figure 2, peut être fixé à la partie inférieure du boîtier 3. Pour assurer un contrôle de l'humidité dans l'enceinte, on ouvrira ou fermera le capot mobile 5 de façon appropriée.

La structure du boîtier de la figure 2 n'est qu'un exemple et de nombreuses structures de capot mobile peuvent être utilisées. Par exemple, le capot mobile pourra être constitué d'ailettes, ou encore de grilles entrecroisées.

La figure 3 est un schéma blocs d'un mode de réalisation d'un dispositif de contrôle d'humidité d'une pile à combustible. On a représenté schématiquement la ou les piles à combustible 1, le boîtier 3 et son capot mobile 5. Le dispositif comprend en outre un détecteur 7 du taux d'humidité dans l'enceinte 3 et un organe de commande 9 qui reçoit des informations du détecteur 7 et qui commande le déplacement du capot mobile 5.

Le dispositif fonctionne comme suit. Pour démarrer la pile à combustible, on place le capot mobile en position fermée. On notera qu'on appelle ici capot fermé un capot dont le taux d'ouverture est compris entre 0 et 5 %. On met alors en route la pile à combustible, c'est-à-dire qu'on l'alimente en hydrogène. Si l'électrolyte de la pile à combustible est sec, la pile à combustible délivre un courant relativement faible et dégage, du côté de sa cathode, quelques molécules d'eau qui s'évaporent dans le boîtier fermé. Ainsi, le taux d'humidité relatif dans l'enceinte 3 fermée augmente et l'électrolyte de la pile à combustible s'hydrate. Lorsque le taux d'humidité relatif dans l'enceinte atteint un seuil prédéterminé, par exemple supérieur à 80 %, le détecteur 7 délivre une information à l'organe de commande 9 qui déclenche l'ouverture du capot mobile 5 et met la cathode de la pile à combustible en contact avec de l'air. L'enceinte 3 sera prévue avec un volume suffisant pour que l'électrolyte de la pile à combustible s'hydrate correctement tout en évitant le noyage de la pile (qui intervient lorsque de l'eau recouvre la cathode et que celle-ci n'est plus en contact avec l'air).

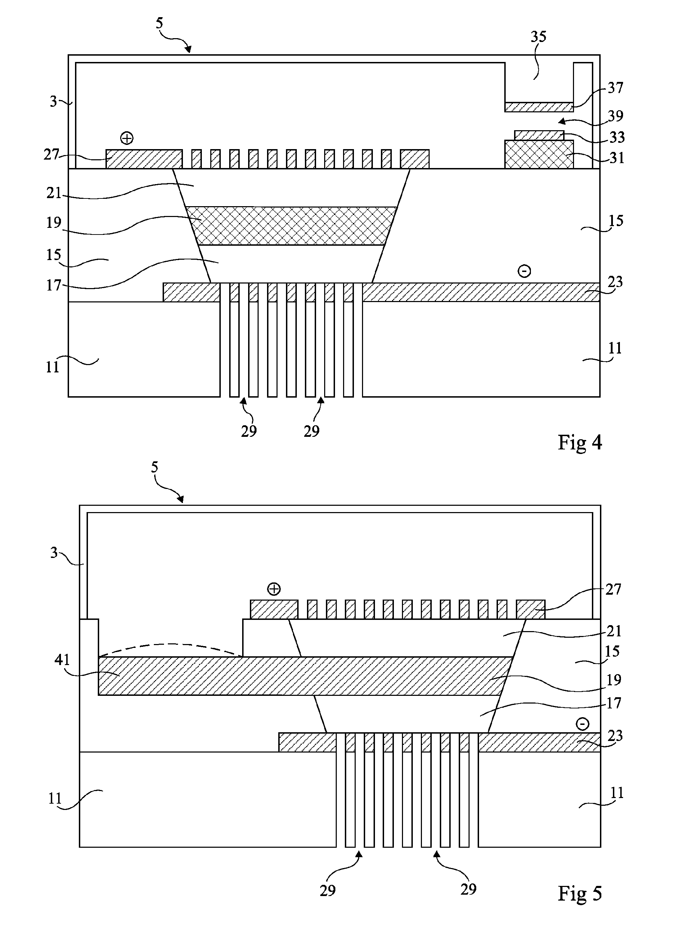

La figure 4 illustre un premier mode de réalisation d'un dispositif de contrôle d'humidité. Pour fixer les idées, on a également représenté un exemple particulier de cellule de pile à combustible.

La cellule de pile à combustible est formée sur une tranche 11 revêtue d'une couche isolante 15 épaisse. La tranche 11 peut être en silicium, en céramique, en graphite, en carbure de silicium, en polymère, en verre... Dans une ouverture de la couche isolante 15 se trouvent les éléments actifs de la pile, à savoir une première couche de catalyseur 17, un électrolyte 19 et une seconde couche de catalyseur 21. Une électrode inférieure 23, placée sur la tranche 11, est en contact avec la couche de catalyseur inférieure 17. Une électrode supérieure 27 est en contact avec la couche de catalyseur supérieure 21. Les électrodes 23 et 27 sont munies d'ouvertures, et des canaux 29 sont formés dans la tranche 11, en regard des ouvertures dans la métallisation 23 de face inférieure. L'électrode inférieure 23 et l'électrode supérieure 27 constituent, respectivement, un collecteur d'anode et un collecteur de cathode.

L'électrolyte 19 peut être en un polymère tel que du Nafion sous forme solide et les couches de catalyseur 17 et 21 sont par exemple des couches à base de carbone et de platine. De façon connue, avec une telle structure, on obtient un potentiel positif sur le collecteur de cathode 27 (côté oxygène) et un potentiel négatif sur le collecteur d'anode 23 (côté hydrogène). Ceci ne constitue qu'un exemple de réalisation. Divers types de piles à combustible sont connus dans la technique.

De l'hydrogène est injecté du côté de la face inférieure dans les canaux 29. Du côté du collecteur de cathode 21 se trouve le boîtier 3 de la pile à combustible comprenant le capot mobile 5. En figure 4, le capot mobile 5 est fermé et la structure permettant son ouverture et sa fermeture n'est pas représentée.

Sur la couche isolante 15 est disposé un plot 31 en un matériau se déformant en fonction du taux d'humidité dans le boîtier. A titre d'exemple, ce matériau peut être le même que celui constituant l'électrolyte 19, par exemple du Nafion qui se dilate lorsque le taux d'humidité augmente. Sur le plot 31 s'étend une première borne métallique 33. La paroi supérieure du boîtier de la pile à combustible comprend une extension verticale 35, en regard de la borne 33, sur laquelle s'étend une seconde borne métallique 37.

Lorsque l'électrolyte 19 de la pile à combustible est dans un état d'assèchement, le matériau du plot 31 l'est également et les bornes métalliques 33 et 37 ne se touchent pas. Lorsque le taux d'humidité dans le boîtier augmente, le volume du plot 31 augmente, ce qui amène les bornes 33 et 37 à se toucher. Ainsi, un interrupteur 39 constitué des bornes 33 et 37 est fermé, et l'information correspondante est transmise à un organe de commande non représenté par des conducteurs électriques non représentés.

La figure 5 illustre un deuxième mode de réalisation d'un dispositif de contrôle d'humidité d'une pile à combustible.

La partie active de la pile à combustible est identique à celle de la figure 4. En outre, l'électrolyte 19 comporte une extension 41 dans la couche isolante 15 au dessus de laquelle la couche isolante 15 est ouverte. L'extension 41 se déforme en fonction du taux d'humidité dans le boîtier, cette déformation étant représentée en pointillés dans la figure. La déformation pourra être détectée par tout moyen approprié, par exemple par un interrupteur similaire à l'interrupteur 39 de la figure 4. La détection de la déformation d'une extension de l'électrolyte permet de détecter le taux d'humidité au plus près de celui-ci et donc d'améliorer la détection.

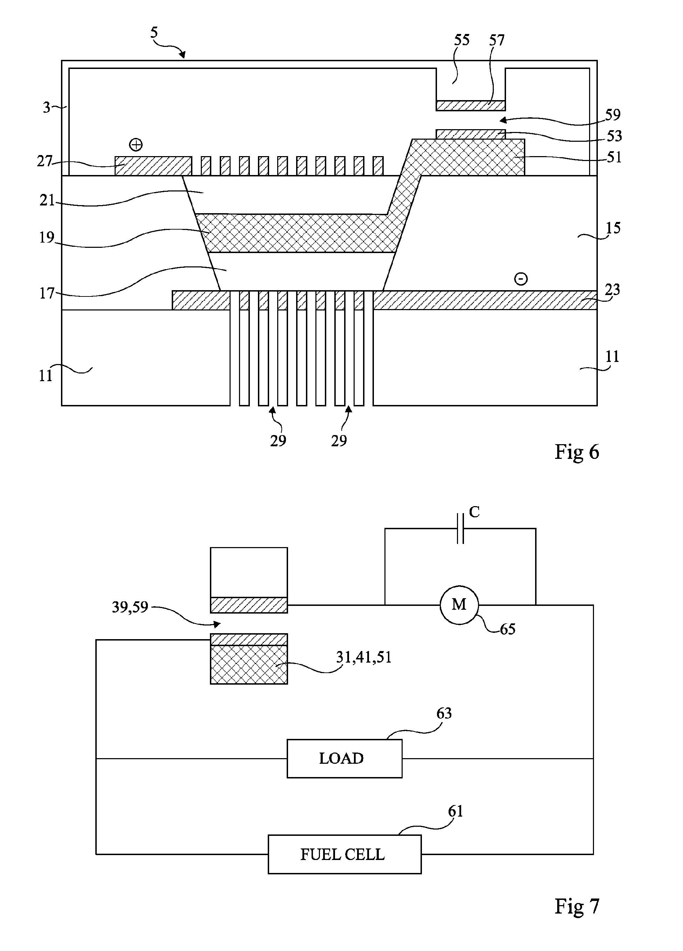

La figure 6 illustre un troisième mode de réalisation d'un dispositif de contrôle d'humidité d'une pile à combustible.

En figure 6, un interrupteur de détection du taux d'humidité dans le boîtier est placé sur une extension 51 de l'électrolyte qui s'étend sur la couche isolante 15. Une première borne métallique 53 s'étend sur l'extension 51 et une extension verticale 55 de la paroi supérieure du boîtier porte une seconde borne métallique 57, en regard de la première borne 53. Les bornes 53 et 57 forment un interrupteur 59 qui se ferme en association avec la déformation du matériau de l'extension 51. Comme dans le mode de réalisation de la figure 5, la formation de l'interrupteur 59 directement sur une extension de l'électrolyte permet de détecter le taux d'humidité au plus près de celui-ci.

Le mode de réalisation de la figure 6 a l'avantage d'être relativement simple à réaliser. En effet, les procédés de formation de piles à combustible prévoient généralement de former une ouverture dans la couche isolante 15 puis de remplir cette ouverture des éléments actifs de la pile (couche de catalyseur 17, couche d'électrolyte 19 et couche de catalyseur 21). La couche d'électrolyte 19 est généralement formée par enduction, c'est-à-dire en déposant une couche de matériau dans l'ouverture et en étalant de façon appropriée cette couche malléable. Ainsi, pour former l'extension 51, il suffit d'étaler le matériau de l'électrolyte sur une plus grande surface et de recouvrir une partie de la couche isolante 15.

La figure 7 est un schéma électrique d'un dispositif de contrôle d'humidité d'une pile à combustible.

On a représenté une pile à combustible 61 (FUEL CELL) connectée à une charge 63 (LOAD). Un circuit comprenant, en série, l'interrupteur 39 ou 59 et un moteur 65 (M) est également connecté aux bornes de la pile 61. Ainsi, lorsque l'interrupteur 39 ou 59 est fermé, la pile à combustible alimente le moteur 65. Le moteur est associé au système d'ouverture et de fermeture du capot mobile 5 du boîtier de la pile à combustible. Ainsi, l'alimentation du moteur permet l'ouverture du capot mobile. Lorsque le capot mobile est ouvert, le moteur est prévu pour avoir une haute impédance et devenir ainsi équivalent à un interrupteur ouvert. Par exemple, on pourra utiliser un moteur pas à pas commandé par un circuit intégré spécialisé permettant la mise en haute impédance des sorties, par exemple le circuit connu sous la référence MC3479C.

Un condensateur C est placé en parallèle avec le moteur 65. Ainsi, lorsque l'interrupteur 39 ou 59 est fermé, le moteur 65 est alimenté et le condensateur C se charge. Si l'interrupteur 39 ou 59 s'ouvre (diminution du taux d'humidité dans le boîtier), le condensateur et le moteur sont alors connectés en circuit fermé et le condensateur se décharge dans le moteur. Ceci permet, avec un moteur adapté, la fermeture du capot mobile. Ainsi, le circuit de la figure 7 permet de gérer le taux d'humidité dans le boîtier et donc de réaliser plusieurs démarrages de la pile à combustible.

On notera que l'on pourra également prévoir un circuit dans lequel le condensateur C est absent dans le cas où l'on prévoit un boîtier initialement fermé que l'on souhaite ouvrir définitivement après un premier démarrage de la pile à combustible. Ceci peut être utile dans le cas de dispositifs susceptibles d'être stockés pendant une longue période avant une utilisation régulière.

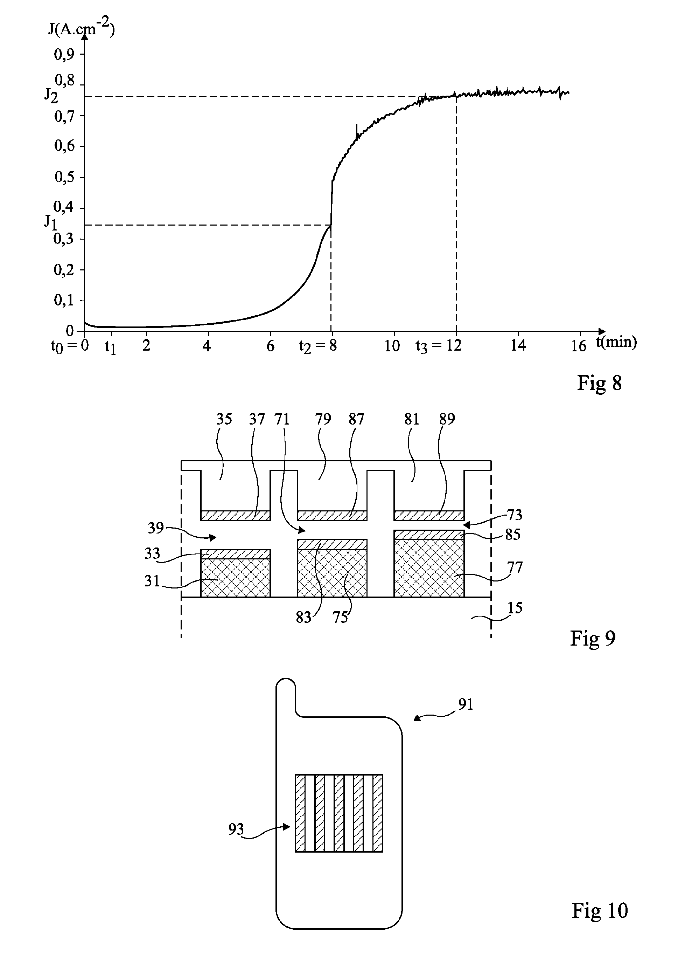

La figure 8 est une courbe illustrant la variation de densité de courant en fonction du temps lors du démarrage d'une pile à combustible à contrôle d'humidité telle que présentée ci-dessus dont l'électrolyte est dans un état initial d'assèchement. Les abscisses sont graduées à titre d'exemple en minutes et les ordonnées en A.cm⁻².

On part d'un état initial, à un instant t₀, dans lequel l'électrolyte de la pile à combustible est dans un état d'assèchement et dans lequel le capot 5 du boîtier de la pile est fermé. Entre l'instant t₀ et un instant t₁, le courant délivré par la pile diminue légèrement. Entre l'instant t₁ et un instant t₂, le courant délivré par la pile stagne puis augmente de plus en plus rapidement pour atteindre, à t = t₂, une valeur J₁. Cette augmentation résulte de l'évaporation de l'eau produite par la pile dans le boîtier fermé et donc de l'augmentation du taux d'humidité de l'électrolyte. A l'instant t₂, l'interrupteur associé au détecteur 7 se ferme, ce qui alimente le moteur 65 et provoque l'ouverture du capot mobile 5. La pile à combustible continue à délivrer un courant qui augmente puis arrive à un état d'équilibre. A un instant t₃, la densité de courant délivrée par la pile atteint une valeur nominale J₂.

La figure 9 illustre une vue partielle d'une variante du dispositif de contrôle d'humidité de la figure 4 dans laquelle plusieurs interrupteurs sont prévus dans le boîtier de la pile à combustible. En figure 9, on a uniquement représenté la partie supérieure droite d'un dispositif similaire à celui de la figure 4, à savoir le haut de la couche isolante 15 sur laquelle est formé l'interrupteur 39.

Deux autres interrupteurs 71 et 73 sont placés sur la couche de matériau isolant 15, à côté de l'interrupteur 39, et l'information correspondant à ces interrupteurs est transmise à un organe de commande non représenté par des conducteurs électriques non représentés. Ces interrupteurs comportent, respectivement, des plots 75 et 77 de matériau se déformant avec le taux d'humidité qui s'étendent sur la couche 15 et, en regard des plots 75 et 77, des extensions verticales 79 et 81 de la paroi supérieure du boîtier. Sur les plots 75 et 77 s'étendent des premières bornes métalliques 83 et 85 et, sur les extensions verticales 79 et 81, des secondes bornes métalliques 87 et 89. Les plots 31, 75 et 77 ont des épaisseurs différentes (épaisseur du plot 75 inférieure à celle du plot 77 et supérieure à celle du plot 31). Lorsque l'humidité augmente dans le boîtier, l'interrupteur 39 se ferme en premier. Les interrupteurs 71 et 73 se ferment ensuite tour à tour lorsque le taux d'humidité augmente. Ainsi, en fonction de l'ouverture et de la fermeture des différents interrupteurs, on détecte différents taux d'humidité dans le boîtier. Ceci permet, avec un circuit électrique adapté, de modifier l'ouverture du capot mobile selon plusieurs positions en fonction du taux d'humidité dans le boîtier et de contrôler ce taux d'humidité pour un fonctionnement optimal de la pile.

On pourra également prévoir des plots 31, 75 et 77 d'épaisseurs identiques mais constitués de matériaux différents dont les épaisseurs varient plus ou moins rapidement avec le taux d'humidité. On comprendra que l'on pourra également former plusieurs interrupteurs en parallèle sur l'extension 51 dans le cas du mode de réalisation de la figure 6.

La figure 10 illustre un exemple de face arrière d'un téléphone portable 91 comprenant une ou plusieurs piles à combustible telles que décrites ici. Le boîtier de la ou des piles à combustible comprend un capot mobile 93 ouvert sur l'extérieur du téléphone. Dans l'exemple représenté, le capot mobile comprend des grilles coulissantes qui en permettent l'ouverture ou la fermeture, du côté de l'alimentation en air de la ou des piles à combustible.

On pourra également prévoir d'utiliser un boîtier comprenant un capot mobile associé à d'autres types de détecteurs du taux d'humidité dans le boîtier de la pile à combustible. Par exemple, le détecteur pourra être un dispositif de mesure de la résistance de l'électrolyte, cette résistance étant directement liée au taux d'humidité de l'électrolyte. On pourra alors prévoir un capot mobile comprenant une multitude de positions, en fonction de cette résistance.

Des modes de réalisation particuliers de la présente invention ont été décrits. Diverses variantes et modifications apparaîtront à l'homme de l'art. En particulier, on pourra prévoir d'autres types de piles à combustible connues dans un boîtier comprenant un capot mobile à ouverture commandée. La réalisation du capot mobile n'a pas été décrite en détail, de nombreux dispositifs pouvant être utilisés pour ouvrir et fermer le boîtier de la ou des piles à combustible, du côté de leur alimentation en oxygène.

Le boîtier comprenant un capot mobile pourra être le boîtier d'une ou de plusieurs piles à combustible. On comprendra que plusieurs boîtiers de piles à combustible pourront être surmontés d'un même capot mobile ou que plusieurs capots mobiles pourront être commandés par un même organe de commande.

Les détecteurs présentés ici comportent tous des plots ou des extensions en des matériaux se dilatant en fonction du taux d'humidité dans le boîtier. On notera que l'on pourra également prévoir d'utiliser des détecteurs comprenant des portions en des matériaux se contractant avec l'augmentation du taux d'humidité, en association avec des circuits électriques adaptés.

De plus, l'organe de commande a été décrit comme étant un moteur. On pourra également prévoir d'utiliser d'autres types d'actionneurs, par exemple des vérins.

## Revendications

1. Pile à combustible oxygène/hydrogène comportent :
- un boîtier comprenant, du côté de la pile destiné à être exposé à de l'air, une enceinte (3) munie d'un capot mobile (5) ;
- un élément en un matériau se déformant en fonction du taux d'humidité (31, 41, 51) dans le boîtier ;
- un moyen de commande (9) de l'ouverture et de la fermeture du capot mobile ; et
- un interrupteur (39, 59) s'ouvrant et se fermant en fonction de la déformation dudit matériau, ledit interrupteur (39, 59) comprenant deux bornes conductrices dont l'une est positionnée en surface de l'élément en un matériau se déformant en fonction du taux d'humidité (31, 41, 51), ledit interrupteur étant associé au moyen de commande et à la pile à combustible par une connexion en série de sorte que la pile à combustible alimente le moyen de commande lorsque l'interrupteur (39, 59) est fermé.

2. Pile à combustible selon la revendication 1, comprenant une couche (19) formant un électrolyte et dans laquelle le matériau (31, 41, 51) se déformant en fonction du taux d'humidité dans le boîtier est identique au matériau formant l'électrolyte.

3. Pile à combustible selon la revendication 1 ou 2, dans laquelle le moyen de commande (7) comprend un moteur (65).

4. Pile à combustible selon la revendication 3, dans laquelle un condensateur (C) est connecté en parallèle sur le moteur (65).

5. Pile à combustible selon l'une quelconque des revendications 1 à 4, comprenant en outre au moins un deuxième interrupteur (71, 73) sensible au taux d'humidité dans le boîtier et associé audit moyen de commande.

6. Procédé de démarrage d'une pile à combustible selon l'une quelconque des revendications 1 à 5, dans lequel, au démarrage, le capot mobile est fermé.

7. Téléphone portable comprenant une pile à combustible selon l'une quelconque des revendications 1 à 5.

## Patentansprüche

1. Eine Sauerstoff/Wasserstoff-Brennstoffzelle, die folgendes aufweist:
- eine Packung, die an der Seite der Zelle, die der Luft ausgesetzt werden soll, eine mit einer beweglichen Kappe (5) ausgestattete Umhüllung (3) aufweist;
- ein Element hergestellt aus einem sich gemäß dem Feuchtigkeitsverhältnis in der Packung deformierenden Material (31, 41, 51);
- Mittel (9) zur Steuerung der Öffnung und zum Schließen der beweglichen Kappe; und
- einen Schalter (39, 59), der sich ein- und ausschaltet als eine Funktion der Deformation der erwähnten Deformation, wobei der Schalter (39, 59) zwei leitende Anschlüsse aufweist, von denen einer an der Oberfläche des Elements positioniert ist, welches als ein Material (31, 41, 51) hergestellt ist, das sich entsprechend dem Feuchtigkeitsverhältnis deformiert, und wobei der Schalter mit Steuermitteln und der Brennstoffzelle durch eine Serien-Verbindung assoziiert ist, so dass die Kraftstoffzelle die Steuermittel dann beliefert, wenn der Schalter (39, 59) eingeschaltet ist.

2. Die Brennstoffzelle nach Anspruch 1, die folgendes aufweist: eine Schicht (19), die einen Elektrolyt bildet und wobei das Material (31, 41, 51) sich entsprechend dem Feuchtigkeitsverhältnis in der Packung deformiert, identisch zu dem Elektrolyt-bildenden Material ist.

3. Die Brennstoffzelle nach Anspruch 1 oder 2, wobei die Steuermittel (7) einen Motor (65) aufweisen.

4. Die Brennstoffzelle nach Anspruch 3, wobei ein Kondensator (C) parallel zum Motor (65) geschaltet ist.

5. Die Brennstoffzelle nach einem der Ansprüche 1 bis 4, wobei ferner mindestens ein zweiter Schalter (71, 73) vorgesehen ist, und zwar empfindlich gegenüber dem Feuchtigkeitsverhältnis der Packung und assoziiert mit den Steuermitteln.

6. Ein Verfahren zum Starten einer Brennstoffzelle gemäß einem der Ansprüche 1 bis 5, wobei beim Starten die bewegliche Kappe geschlossen ist.

7. Ein Mobiltelefon, welches die Brennstoffzelle nach einem der Ansprüche 1 bis 5 aufweist.

## Claims

1. An oxygen/hydrogen fuel cell comprising:
- a package comprising, on the side of the cell intended to be exposed to air, an enclosure (3) provided with a mobile cap (5);
- an element made of a material (31, 41, 51) deforming according to the humidity ratio in the package;
- means (9) for controlling the opening and the closing of the mobile cap; and
- a switch (39, 59) turning off and on as a function of the deformation of said deformation, said switch (39, 59) comprising two conductive terminals, one of which is positioned at the surface of said element made of a material (31, 41, 51) deforming according to the humidity ratio, said switch being associated with the control means and the fuel cell by a series connection, so that the fuel cell supplies the control means when the switch (39, 59) is on.

2. The fuel cell of claim 1, comprising a layer (19) forming an electrolyte and wherein the material (31, 41, 51) deforming according to the humidity ratio in the package is identical to the material forming the electrolyte.

3. The fuel cell of claim 1 or 2, wherein the control means (7) comprise a motor (65).

4. The fuel cell of claim 3, wherein a capacitor (C) is connected in parallel on the motor (65).

5. The fuel cell of any of claims 1 to 4, further comprising at least one second switch (71, 73) sensitive to the humidity ratio in the package and associated with said control means.

6. A method for starting a fuel cell according to any of claims 1 to 5, wherein, when starting, the mobile cap is closed.

7. A cell phone comprising the fuel cell of any of claims 1 to 5.
